# EUROPEAN PATENT APPLICATION

(11) **EP 4 621 229 A1**
(43) Date of publication of application: **24.09.2025**
(21) Application number: 25163999.3
(22) Date of filing: 15.03.2025
(51) Int. Cl.: F04B 39/00, F04B 49/06, F04B 49/10, F04B 9/02

(54) **BOOSTER PUMP WITH CONDUIT SYSTEM**

(30) Priority: 18.03.2024 US 202418608118
(71) Applicant: Haskel International, LLC, Burbank, CA 91502 (US)
(72) Inventor: GILLBERG, Richard, Burbank, 91502 (US); GIRGIS, John, Burbank, 91502 (US)
(74) Representative: Murgitroyd & Company

(57) **Abstract**

A pump system includes a first cylinder, a first piston disposed within the first cylinder to define a first chamber portion and a second chamber portion within the first cylinder, a second cylinder, a second piston disposed within the second cylinder to define a third chamber portion and a fourth chamber portion within the second cylinder, and a conduit system. The first piston is movable in a first direction to draw working fluid into the first chamber portion and in a second direction to pressurize working fluid in the first chamber portion. The second piston is movable in a third direction to draw working fluid into the third chamber portion and in a fourth direction to pressurize working fluid in the third chamber portion. The conduit system fluidly couples the second chamber portion and the fourth chamber to one chamber portion.

## Description

### TECHNICAL FIELD

The present disclosure is directed pumps and more specifically to a conduit system for a booster pump.

### BACKGROUND

Booster pumps may be used to increase the pressure of a fluid, such as gas. A booster pump may include multiple cylinders and a respective piston disposed within each cylinder. Movement of the piston within its cylinder compresses a fluid in the cylinder, thereby increasing the pressure of the fluid. The interior of a cylinder may be susceptible to intake of contaminants from an external environment surrounding the booster pump. The presence of the contaminants in the cylinder may negatively impact operation of the booster pump. For example, the contaminants may mix with and affect composition of the fluid being compressed or otherwise reduce operation of a component of the booster pump.

### SUMMARY

It is an object of the present invention to overcome the above disadvantages. These and other objects can be achieved by the features as defined by the independent claims. Further enhancements and advantages are characterized by the dependent claims.

In one embodiment, a pump system includes a first cylinder, a first piston, a second cylinder, a second piston, and a conduit system. The first piston is disposed within the first cylinder to define a first chamber portion and a second chamber portion within the first cylinder, the first piston is configured to move in a first direction within the first cylinder to draw working fluid into the first chamber portion, and the first piston is configured to move in a second direction within the first cylinder to pressurize working fluid and discharge working fluid from the first chamber portion. The second piston is disposed within the second cylinder to define a third chamber portion and a fourth chamber portion within the second cylinder, the second piston is configured to move in a third direction within the second cylinder to draw working fluid into the third chamber portion, and the second piston is configured to move in a fourth direction within the second cylinder to pressurize working fluid and discharge working fluid from the third chamber portion. The conduit system fluidly couples the second chamber portion and the fourth chamber portion to one another, and the conduit system is configured to direct a fluid between the second chamber portion and the fourth chamber portion.

In a preferred embodiment of the pump system the first piston is configured to move in the second direction within the first cylinder to direct fluid from the second chamber portion toward the fourth chamber portion via the conduit system, and the second piston is configured to move in the fourth direction within the second cylinder to direct fluid from the fourth chamber portion toward the second chamber portion via the conduit system. The pump system optionally comprises a vent system configured to discharge fluid from the conduit system.

In a preferred embodiment of the vent system, the vent system comprises a regulating valve configured to actuate to discharge fluid from the conduit system based on a fluid pressure within the conduit system exceeding a threshold pressure.

In a preferred embodiment of the pump system comprises a valve configured to direct a process gas from a process gas source into the conduit system. Optionally the fluid directed between the second chamber portion and the fourth chamber portion via the conduit system comprises the process gas. In a preferred embodiment of the pump system the valve is configured to introduce the process gas into the conduit system at a positive pressure relative to a pressure of air in an external environment surrounding the pump system.

In a preferred embodiment of the pump system, the first cylinder and the second cylinder have equal cross-sectional areas. In another preferred embodiment the first piston and the second piston have equal cross-sectional areas. Optionally the pump system is a single stage, gas booster pump in which the first piston and the second piston are configured to pressurize separate working fluid flows.

In another embodiment, a pump system includes a first cylinder, a first piston, a second cylinder, and a second piston. The first piston is disposed within the first cylinder to define a first chamber portion and a second chamber portion within the first cylinder, the first cylinder is configured to receive working fluid at the first chamber portion, and the first piston is configured to pressurize working fluid within the first chamber portion. The second piston is disposed within the second cylinder to define a third chamber portion and a fourth chamber portion within the second cylinder, the second cylinder is configured to receive working fluid at the third chamber portion, and the second piston is configured to pressurize working fluid within the third chamber portion. Additionally, the second chamber portion and the fourth chamber portion are fluidly coupled to one another, and movement of the first piston in the first cylinder to pressurize working fluid within the first chamber portion, movement of the second piston in the second cylinder to pressurize working fluid within the third chamber portion, or both, directs fluid between the second chamber portion and the fourth chamber portion.

The pump system preferably comprises a conduit system fluidly coupled to the second chamber portion and to the fourth chamber portion. In a preferred embodiment of the pump system fluid directed between the second chamber portion and the fourth chamber portion via the conduit system comprises a process gas introduced into the conduit system at a positive pressure relative to a pressure of air in an external environment surrounding the pump system.

In a preferred embodiment of the pump system the conduit system comprises: a discharge conduit configured to discharge fluid from the conduit system; and a three way valve, wherein a first position of the three way valve is configured to direct fluid between the second chamber portion and the fourth chamber portion, and a second position of the three way valve is configured to direct fluid to the discharge conduit.

In a preferred embodiment the pump system comprises a drive shaft coupled to the first piston and to the second piston, wherein movement of the drive shaft in a first direction is configured to drive movement of the first piston to pressurize working fluid within the first chamber portion and to drive movement of the second piston to draw working fluid into the third chamber portion, and movement of the drive shaft in a second direction, opposite the first direction, is configured to drive movement of the second piston to pressurize working fluid within the third chamber portion and to drive movement of the first piston to draw working fluid into the first chamber portion.

In another preferred embodiment the movement of the drive shaft in the first direction is configured to drive movement of the second piston to direct fluid from the fourth chamber portion toward the second chamber portion, and movement of the drive shaft in the second direction is configured to drive movement of the first piston to direct fluid from the second chamber portion toward the fourth chamber portion.

In another preferred embodiment the first piston is configured to pressurize a working fluid flow, the first cylinder is configured to discharge the working fluid flow pressurized by the first piston to the second cylinder, and the second piston is configured to further pressurize the working fluid flow.

In a further embodiment, a conduit system includes a first leg configured to fluidly couple to a first chamber portion of a first cylinder that includes a first piston defining the first chamber portion and a second chamber portion, as well as a second leg configured to fluidly couple to a third chamber portion of a second cylinder that includes a second piston defining the third chamber portion and a fourth chamber portion. Movement of the first piston in the first cylinder pressurizes working fluid in the second chamber portion, movement of the second piston in the second cylinder pressurizes working fluid in the fourth chamber portion, and the first leg and the second leg fluidly couple the first chamber portion and the third chamber portion to one another. In a preferred embodiment the conduit system further comprises a valve configured to introduce a process fluid into the conduit system at a threshold pressure, and the first leg and the second leg are configured to direct the process fluid between the first chamber portion and the third chamber portion. In a preferred embodiment the conduit system further comprises a valve configured to direct fluid out of the first leg and the second leg at a threshold pressure.

### BRIEF DESCRIPTION OF THE DRAWINGS

To complete the description and provide a better understanding of the present disclosure, a set of drawings is provided. The drawings form an integral part of the description and illustrate an embodiment of the present disclosure, which should not be interpreted as restricting the scope of the disclosure, but just as an example of how the invention can be carried out.
FIG. 1 is a cross-sectional side view of a pump system, in accordance with an embodiment of the present disclosure.
FIG. 2 is a schematic diagram of a fluid circuit of a pump system, in accordance with an embodiment of the present disclosure.
FIG. 3 is a schematic diagram of another fluid circuit of a pump system, in accordance with an embodiment of the present disclosure.
FIG. 4 is a schematic diagram of yet another fluid circuit of a pump system, in accordance with an embodiment of the present disclosure.
FIG. 5 is a flowchart of a method for operating a fluid circuit of a pump system, in accordance with an embodiment of the present disclosure.
Like numerals have been used throughout the Figures.

### DETAILED DESCRIPTION

The present disclosure is directed to reducing potential intake of contaminants into a pump system, such as a booster. During operation, the booster increases a pressure of a fluid (e.g., a working fluid). For example, the booster includes a cylinder that defines a chamber, as well as a piston that is disposed in the chamber to define a first portion and a second portion of the chamber. The fluid is directed into the first portion (e.g., a pressurization portion), and the piston is configured to move within chamber to reduce the volume of the first portion, thereby pressurizing the fluid. The pressurized fluid is then discharged from the chamber.

Movement of the piston to adjust the volume of the first portion correspondingly adjusts the volume of the second portion. In particular, movement of the piston to reduce the volume of the first portion also increases the volume of the second portion, and movement of the piston to increase the volume of the first portion also reduces the volume of the second portion. Movement of the piston to adjust the volume of the second portion may cause certain external particles to flow between the second portion and an external environment surrounding the cylinder. For example, movement of the piston to increase the volume of the second portion may reduce a pressure within the second portion. As a result, external particles, ambient air, moisture, dust, and/or debris (for simplicity, collectively referred to as external particles), may be urged to flow from the external environment to fill the second portion having the reduced pressure.

Unfortunately, in some circumstances, the external particles may mix with the fluid being compressed by the pump system (referred to herein as "working fluid" and variants thereof). For example, there may be a space or gap between the piston and the cylinder that enables the external particles to flow across the piston between the second portion to the first portion, thereby mixing with one another. As a result, the composition of the working fluid may be negatively affected. Additionally or alternatively, the external particles may potentially be discharged from the cylinder (e.g., from the first portion via movement of the piston) and directed elsewhere in the pump system. The external particles may then contact and potentially affect a structural integrity of a component (e.g., a seal) of the pump system.

Thus, reducing intake of the external particles into the cylinder may improve the composition of the working fluid being pressurized and/or a useful lifespan of the pump system. Therefore, in accordance with embodiments of the present disclosure, an additional fluid (e.g., a process fluid) is directed into the second portion of the chamber defined by the cylinder. The additional fluid fills the second portion to pressurize the second portion and block potential intake of external particles into the second portion. For example, during movement of the piston to increase the volume of the second portion (e.g., movement of the piston to reduce the volume of the first portion), the additional fluid may be directed into the second portion.

During movement of the piston to reduce the volume of the second portion (e.g., movement of the piston to increase the volume of the first portion), the additional fluid may be discharged from the second portion to facilitate movement of the piston. Thus, the additional fluid may be directed into and out of the second portion to maintain the pressure in the second portion without affecting (e.g., hindering) movement of the piston. The pump system includes a conduit system to direct the additional fluid into and out of the second portion. By way of example, the conduit system may fluidly couple the second portion of the cylinder with an additional cylinder and may facilitate flow of the additional fluid between the cylinder and the additional cylinder (e.g., during movement of respective pistons within the cylinder and the additional cylinder). Such a connection may efficiently utilize the additional fluid while avoiding intake of external particles into each cylinder. Accordingly, operation of the pump system may be improved.

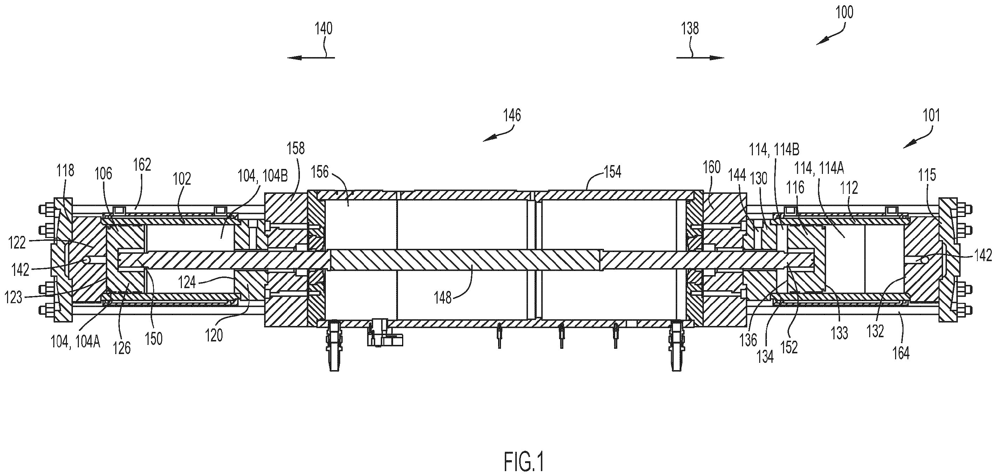

FIG. 1 is a cross-sectional view of a pump system 100. The pump system 100 is a booster configured to increase pressure of a fluid, such as a gas. The pump system 100 includes a pump portion 101 with a first cylinder 102 defining a first chamber 104 within which at least one working fluid may be pumped/pressurized. More specifically, a first piston 106 is disposed within the first chamber 104 to divide the first chamber 104 into a first chamber portion 104A and a second chamber portion 104B, with one on either side of the first piston 106. The first piston 106 is configured to move within the first chamber 104 to adjust a volume of the first chamber portion 104A and of the second chamber portion 104B. The pump portion 101 also includes a second cylinder 112 defining a second chamber 114. A second piston 116 is disposed within the second chamber 114 to divide the second chamber 114 into a third chamber portion 114A and a fourth chamber portion 114B, with one on either side of the second piston 116.

The pump portion 101 includes a first end cap 118 (e.g., a first outer cap) and a first inner cap 120 coupled to opposite ends of the first cylinder 102 to enclose the first chamber 104. The first chamber portion 104A is formed between a first end wall 122 (e.g., a first inner wall) of the first end cap 118 and a first side or surface 123 (e.g., a first pressurization side) of the first piston 106, and the second chamber portion 104B is formed between a second end wall 124 (e.g., a first outer wall) of the first inner cap 120 and a second side or surface 126 (e.g., a backside) of the first piston 106. The pump portion 101 also includes a second end cap 128 (e.g., a second outer cap) and a second inner cap 130 coupled to opposite ends of the second cylinder 112 to enclose the second chamber 114. The third chamber portion 114A is formed between a second end wall 132 (e.g., a second inner wall) of the second end cap 128 and a third side or surface 133 (e.g., a second pressurization side) of the second piston 116, and the fourth chamber portion 114B is formed between a fourth end wall 134 (e.g., a second outer wall) of the second inner cap 130 and a fourth side or surface 136 (e.g., a backside) of the second piston 116.

In some embodiments, the first chamber portion 104A and the third chamber portion 114A are configured to receive working fluid for pressurization by the first piston 106 and by the second piston 116, respectively. For example, movement of the first piston 106 away from the first end cap 118 in a first direction 138 increases a volume of the first chamber portion 104A to draw working fluid flow into the first cylinder 102 at the first chamber portion 104A. Movement of the first piston 106 in a second direction 140, opposite the first direction 138, toward the first end cap 118 reduces the volume of the first chamber portion 104A to increase the pressure of the working fluid in the first chamber portion 104A and discharge the pressurized working fluid out of the first chamber portion 104A. Movement of the second piston 116 in the second direction 140 away from the second end cap 128 increases a volume of the third chamber portion 114A to draw working fluid flow (e.g., the same or different fluid as that in the first cylinder 102) into the second cylinder 112 at the third chamber portion 114A. Movement of the second piston 116 in the first direction 138 toward the second end cap 128 reduces the volume of the third chamber portion 114A to increase the pressure of the working fluid in the third chamber portion 114A and discharge the pressurized working fluid out of the third chamber portion 114A. The first end cap 118 and the second end cap 128 include first passageways 142 and valves (e.g., one-way valves, such as check valves) to allow the working fluid to flow into and out of the first chamber portion 104A and the third chamber portion 114A, respectively.

In accordance with embodiments of the present application, a process or cavity fluid may fill the second chamber portion 104B and/or the fourth chamber portion 114B to provide "breathing" or venting of the first piston 106 and/or of the second piston 116, respectively (e.g., between strokes of the pistons 106, 116). That is, movement of the first piston 106 in the second direction 140 increases a volume of the second chamber portion 104B and may draw the process fluid into the second chamber portion 104B. Then, movement of the first piston 106 in the first direction 138 reduces the volume of the second chamber portion 104B and may discharge the process fluid from the second chamber portion 104B. Similarly, movement of the second piston 116 in the first direction 138 increases a volume of the fourth chamber portion 114B and may draw the process fluid into the fourth chamber portion 114B, while movement of the second piston 116 in the second direction 140 reduces the volume of the fourth chamber portion 114B and may discharge the process fluid from the fourth chamber portion 114B. Such movement of the process fluid into and out of the second chamber portion 104B and/or of the fourth chamber portion 114B may facilitate movement of the pistons 106, 116 (e.g., by balancing the pressure at opposite sides of the pistons 106, 116). The first inner cap 120 and the second inner cap 130 include second passageways 144 and valves (e.g., check valves) to allow the process fluid to flow into and out of the second chamber portion 104B and the fourth chamber portion 114B, respectively.

Additionally, filling the second chamber portion 104B and/or the fourth chamber portion 114B with the desirable process fluid may block external particles, such as ambient air or other contaminants that may otherwise negatively affect operation of the pump system 100, from entering cylinders 102, 112. For example, when process fluid pressurizes the second chamber portion 104B and/or the fourth chamber portion 114B, the process fluid blocks potential flow of external particles from the external environment into the second chamber portion 104B and/or into the fourth chamber portion 114B. Thus, introducing process fluid to these locations may prevent, or at least discourage, contaminants from mixing with working fluid and/or from unwantedly contacting a component of the pump system 100. In turn, this maintains a desirable operation of the pump system 100 and/or a usability of the working fluid.

If the second chamber portion 104B and the fourth chamber portion 114B were filled with process fluid, but not otherwise connected to fluid conduits, the process fluid might flow across the first piston 106 and/or across the second piston 116. That is, in this scenario, process fluid may flow from the second chamber portion 104B to the first chamber portion 104A and/or from the fourth chamber portion 114B to the third chamber portion 114A and mix with the working fluid in the first chamber portion 104A and/or in the third chamber portion 114A. Consequently, with the techniques presented herein, the process fluid may be pressurized by the pistons 106, 116 and directed elsewhere (e.g., to contact another component of the pump system 100, to a different system fluidly coupled to the pump system 100, to another operation for further processing). However, out of abundance of caution, the process fluid might also have a composition and other properties that avoid negatively affecting operation of the pump system 100 and/or that avoid undesirable contamination of the working fluid. By way of example, the process fluid can be or include hydrogen gas.

In some embodiments, a working fluid flow directed through the pump portion 101 is pressurized by each of the first piston 106 and the second piston 116. For example, the working fluid flow is initially pressurized by the first piston 106 (e.g., a low-pressure piston) within the first chamber 104 (e.g., a low-pressure chamber), and the working fluid flow is directed from the first chamber 104 into the second chamber 114 (e.g., a high-pressure chamber) for further pressurization by the second piston 116 (e.g., a high-pressure piston). In such embodiments, the pump system 100 is a two-stage booster that pressurizes the same working fluid flow via each of the pistons 106, 116. In additional or alternative embodiments, different working fluid flows are pressurized by one of the pistons 106, 116. That is, in some instances, separate working fluid flows are directed into the first chamber 104 and into the second chamber 114 for pressurization. In such embodiments, the pump system 100 is a single-stage booster. The pump system might also operate in any other stage arrangement now known or developed hereafter.

The pump portion 101 of the depicted embodiment further includes a pump drive system 146 configured to actuate the pistons 106, 116. The pump drive system 146 includes a drive shaft or rod 148 coupled to each of the first piston 106 and the second piston 116. For instance, the drive shaft 148 includes a first end 150 that extends toward the first cylinder 102 to couple to the first piston 106, as well as a second end 152, opposite the first end 150, that extends toward the second cylinder 112 to couple to the second piston 116. Movement of the drive shaft 148 therefore drives movement of each of the pistons 106, 116, at least in the depicted embodiment. However, in other embodiments, a respective drive shaft 148 may be connected to and configured to drive the pistons 106, 116.

In the embodiment depicted in FIG. 1, movement (e.g., translation) of the drive shaft 148 in the first direction 138 drives movement of the second piston 116 toward the second end cap 128 and movement of the first piston 106 away from the first end cap 118. Accordingly, movement of the drive shaft 148 in the first direction 138 reduces a volume of the third chamber portion 114A to pressurize the working fluid in the third chamber portion 114A and increases a volume of the first chamber portion 104A to draw working fluid into the first chamber portion104A. Movement (e.g., translation) of the drive shaft 148 in the second direction 140 drives movement of the first piston 106 toward the first end cap 118 and movement of the second piston 116 away from the second end cap 128. Consequently, movement of the drive shaft 148 in the second direction 140 reduces a volume of the first chamber portion 104A to pressurize the working fluid in the first chamber portion 104A and increases a volume of the third chamber portion 114A to draw working fluid into the third chamber portion 114A. the drive shaft 148 may alternate between moving in the first direction 138 and in the second direction 140 to alternatively pressurize fluid in the first chamber portion 104A and in the third chamber portion 114A.

The pump drive system 146 also includes a housing 154 defining an interior 156. The drive shaft 148 extends through the interior 156, and the housing 154 shields the drive shaft 148 from an external environment, thereby protecting the drive shaft 148 from dust, debris, or other contaminants in the external environment. The housing 154 may also align the drive shaft 148 with the first chamber 104 and with the second chamber 114.

For example, in the depicted embodiment, a first adapter 158 is coupled to the housing 154 and to the first inner cap 120, and the first inner cap 120 (e.g., the second end wall 124) is coupled to the first cylinder 102 to couple and align the housing 154 to the first cylinder 102. A second adapter 160 is also coupled to the housing 154 and to the second inner cap 130, and the second inner cap 130 (e.g., the fourth end wall 134) is coupled to the second cylinder 112 to couple and align the housing 154 to the second cylinder 112. The drive shaft 148 extends through the adapters 158, 160 and into cylinders 102, 112 aligned with the housing 154. Moreover, the first end cap 118 (e.g., the first end wall 122) is coupled to the first cylinder 102, and first stay rods 162 are coupled to the first adapter 158 and to the first end cap 118, thereby providing further securement between the housing 154 coupled to the first adapter 158 and the first cylinder 102 coupled to the first end cap 118. The second end cap 128 (e.g., the second end wall 132) is coupled to the second cylinder 112, and second stay rods 164 are coupled to the second adapter 160 and to the second end cap 128, thereby providing further securement between the housing 154 coupled to the second adapter 160 and the second cylinder 112 coupled to the second end cap 128. However, in other embodiments, the housing 154 may be coupled to one or more cylinders in any manner now known or developed hereafter.

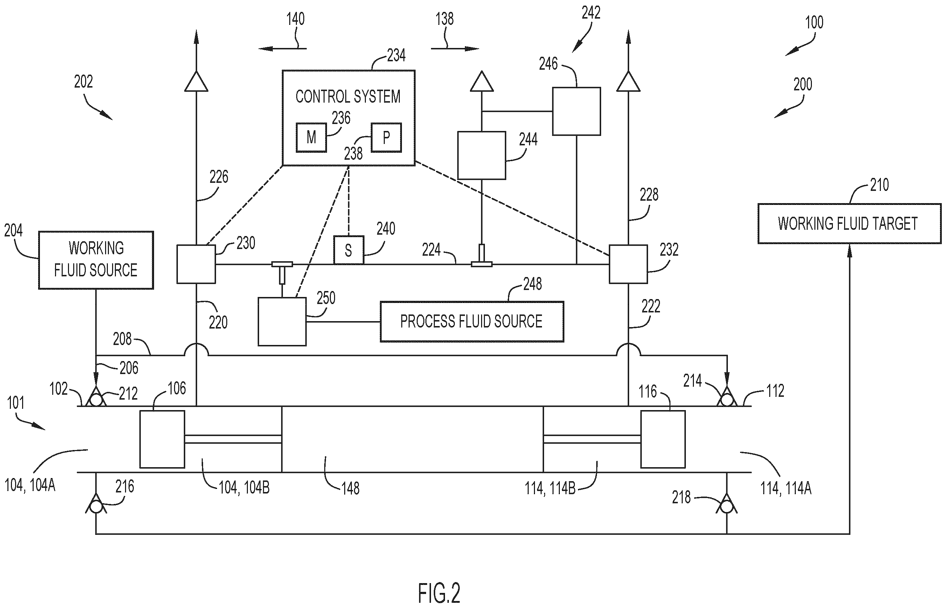

FIG. 2 is a schematic diagram of a fluid circuit 200 that may be implemented in the pump system 100. The fluid circuit 200 includes a conduit system 202 fluidly coupled to the pump portion 101. Certain components of the pump system 100, such as the end caps 118, 128, the inner caps 120, 130, and the adapters 158, 160, are not shown for visualization purposes. Additionally, a working fluid source 204 (e.g., a working fluid reservoir, a working fluid processing system) is shown directing working fluid into the pump portion 101 in the illustrated embodiment, but the working fluid source 204 need not be a part of the pump system 100. In the illustrated embodiment, separate working fluid flows are directed to the respective cylinders 102, 112. That is, the working fluid source 204 directs a first working fluid flow 206 into the first cylinder 102, such as into the first chamber portion 104A (e.g., via the first passageway 142 of the first end cap 118), and a second working fluid flow 208 into the second cylinder 112, such as into the third chamber portion 114A (e.g., via the first passageway 142 of the second end cap 128). Therefore, the pistons 106, 116 separately pressurize the working fluid flows 206, 208. For example, movement of the drive shaft 148 in the first direction 138 causes the second piston 116 to pressurize the second working fluid flow 208 in the third chamber portion 114A, and movement of the drive shaft 148 in the second direction 140 causes the first piston 106 to pressurize the first working fluid flow 206 in the first chamber portion 104A.

After the first working fluid flow 206 and second working fluid flow 208 are pressurized by the pump portion 101, these working fluid flows 206, 208 are discharged from the cylinders 102, 112, respectively, and directed to a working fluid target 210 (e.g., another component of the pump system 100, a component external to the pump system 100). To this end, a first valve 212, which may be a one-way valve, such as a check valve, blocks the first working fluid flow 206 from exiting the first cylinder 102 toward the working fluid source 204, thereby forcing the pressurized first working fluid flow 206 to discharge toward the working fluid target 210, and a second valve 214, which may be a one-way valve, such as a check valve, blocks the second working fluid flow 208 from exiting the second cylinder 112 toward the working fluid source 204, thereby forcing the pressurized second working fluid flow 208 to discharge toward the working fluid target 210.

As an example, the pressurized working fluid flows 206, 208 discharged from the cylinders 102, 112, respectively, may be combined and directed to the same working fluid target 210. Additionally or alternatively, the pressurized working fluid flows 206, 208 may be separately directed (e.g., in parallel with one another) to the same working fluid target 210 or to different working fluid targets 210. In either example, the pump system 100 is a single-stage booster in which each working fluid flow 206, 208 undergoes a single pressurization by one of the pistons 106, 116. A third valve 216, which may be a one-way valve, such as a check valve, blocks pressurized working fluid flows 206, 208 from re-entering the first cylinder 102, and a fourth valve 218, which may be a one-way valve, such as a check valve, blocks pressurized working fluid flows 206, 208 from re-entering the second cylinder 112. Thus, the pressurized working fluid flows 206, 208 are forced toward the working fluid target 210.

The conduit system 202 is configured to direct a process fluid/gas into the second chamber portion 104B and into the fourth chamber portion 114B. The process fluid in the second chamber portion 104B may facilitate movement of the first piston 106, and the process fluid in the fourth chamber portion 114B may facilitate movement of the second piston 116. Additionally, the process fluid in the second chamber portion 104B and in the fourth chamber portion 114B may block introduction of external particles (e.g., ambient air, dust, debris) into the second chamber portion 104B and into the fourth chamber portion 114B to maintain desirable operation of the pump system 100. For example, blocking external particles from entering the second chamber portion 104B and the fourth chamber portion 114B may prevent, or least discourage, external particles from mixing with the working fluid (e.g., via flow of the external particles across the first piston 106 from the second chamber portion 104B to the first chamber portion 104A and/or across the second piston 116 from the fourth chamber portion 114B to the third chamber portion 114A). Instead, any mixing of substances into the working fluid may comprise mixing of process fluid into the working fluid, which will not negatively affect an operation and/or structural integrity of the pump system 100. Consequently, a desirable operation and/or a useful lifespan of the pump system 100 may be maintained.

The conduit system 202 includes a first leg or exchange conduit 220 configured to direct process fluid into and out of the second chamber portion 104B, as well as a second leg or exchange conduit 222 configured to direct process fluid into and out of the fourth chamber portion 114B. By way of example, the first exchange conduit 220 and the second exchange conduit 222 may be fluidly coupled to the second passageways 144 of the inner caps 120, 130. Additionally, the first exchange conduit 220 and the second exchange conduit 222 are fluidly coupled to one another via a third exchange conduit 224 (e.g., a shared conduit). Thus, process fluid may flow between the second chamber portion 104B and the fourth chamber portion 114B via the exchange conduits 220, 222, 224.

More specifically, movement of the drive shaft 148 in the first direction 138 moves the first piston 106 to reduce the volume of the second chamber portion 104B and moves the second piston 116 to increase the volume of the fourth chamber portion 114B. As a result, process fluid is forced out of the second chamber portion 104B and into the first exchange conduit 220, and the process fluid flows from the first exchange conduit 220, through the third exchange conduit 224, through the second exchange conduit 222, and into the fourth chamber portion 114B to fill the fourth chamber portion 114B. Thus, process fluid is exchanged between the cylinders 102, 112 in accordance with adjusted volumes of the second chamber portion 104B and of the fourth chamber portion 114B, as caused by movement of the pistons 106, 116. However, the shrinking chamber (e.g., the chamber portion 104B in this example) does not empty. Instead, the second chamber portion 104B and the fourth chamber portion 114B both remain filled an appropriate amount/pressure of process fluid to block introduction of external particles into the second chamber portion 104B and into the fourth chamber portion 114B.

In certain embodiments, the pump portion 101 is arranged such that a volume adjustment of the second chamber portion 104B corresponds to a volume adjustment of the fourth chamber portion 114B. That is, for example, during movement of the first piston 106 to increase the volume of the second chamber portion 104B by a particular amount, the second piston 116 may move to reduce the volume of the fourth chamber portion 114B by the same particular amount. The corresponding volume adjustments of the second chamber portion 104B and of the fourth chamber portion 114B enable corresponding amounts of process fluid to flow between the second chamber portion 104B and the fourth chamber portion 114B.

For instance, reducing the volume of the fourth chamber portion 114B by a particular amount discharges an amount of process fluid from the fourth chamber portion 114B. Correspondingly, the volume of the second chamber portion 104B is increased by approximately the same particular amount to accommodate intake of the amount of process fluid discharged from the fourth chamber portion 114B. In other words, movement of the pistons 106, 116 to reduce the volume of one of the chamber portions 104B, 114B may concurrently increase the volume of the other of the chamber portions 104B, 114B to facilitate flow of an amount of the process fluid from one of the chamber portions 104B, 114B into the other of the chamber portions 104B, 114B. In such instances, a total amount of process fluid within the conduit system 202 may be easily controlled and maintained during operation of the pump system 100. In some instances, relatively constant amounts of process fluid flow between the second chamber portion 104B and the fourth chamber portion 114B because the cylinders 102, 112 have approximately equal cross-sectional area (e.g., are of the same size) and the pistons 106, 116 have approximately equal cross-sectional area (e.g., are of the same size). However, other embodiments may transfer a constant amount of process fluid between cylinders of differing geometries by adjusting stroke lengths, cylinder sizes, piston sizes, etc.

In some circumstances, it may be desirable to direct fluid out of the conduit system 202 (e.g., to the external environment, to a fluid reservoir, to a fluid processing system). For example, it may be desirable to clean or replace the process fluid to remove potential contaminants that may be contained within the process fluid and/or to avoid a pressure buildup within the conduit system 202 that may otherwise affect a structural integrity of components of the conduit system 202 (e.g., as a result of working fluid leakage into the conduit system 202). Thus, a useful lifespan of the conduit system 202 may be improved. To this end, the depicted conduit system 202 includes a first discharge conduit 226 and a second discharge conduit 228. The first discharge conduit 226 is fluidly coupled to the first exchange conduit 220 and to the third exchange conduit 224 via a first three way valve 230, and the second discharge conduit 228 is fluidly coupled to the second exchange conduit 222 and to the third exchange conduit 224 via a second three way valve 232.

The three way valves 230, 232 are adjustable to change the flow of process fluid through the conduit system 202. For instance, a first position of the first three way valve 230 may direct fluid from the first exchange conduit 220 to the third exchange conduit 224 (e.g., to direct process fluid toward the fourth chamber portion 114B), and a second position of the first three way valve 230 may direct fluid from the first exchange conduit 220 to the first discharge conduit 226 (e.g., to direct process fluid out of the conduit system 202). A first position of the second three way valve 232 may direct fluid from the second exchange conduit 222 to the third exchange conduit 224 (e.g., to direct process fluid toward the second chamber portion 104B), and a second position of the second three way valve 232 may direct fluid from the second exchange conduit 222 to the second discharge conduit 228 (e.g., to direct process fluid out of the conduit system 202). As such, the three way valves 230, 232 may be adjusted between the first position and the second position to selectively control fluid flow through the conduit system 202. In certain embodiments, the three way valves 230, 232 are configured to transition to an intermediate position between the first position and the second position to direct some fluid to the third exchange conduit 224 and some fluid to a corresponding one of the discharge conduits 226, 228. That all said, in other embodiments, the conduit system 202 might include any number of discharge paths/conduits in any location and may connect the discharge paths/conduits to exchange conduits in any manner.

In some embodiments, the pump system 100 includes or is communicatively coupled to a control system 234 configured to operate certain components of the pump system 100, such as the drive shaft 148 and the three way valves 230, 232. The control system 234 includes a memory 236 and a processor 238 (e.g., processing circuitry). The memory 236 includes read only memory (ROM), random access memory (RAM), magnetic disk storage media devices, optical storage media devices, flash memory devices, electrical, optical, or other physical/tangible (e.g., non-transitory) memory storage devices. Thus, in general, the memory 236 includes one or more computer-readable storage media (e.g., a memory device) encoded with software with computer executable instructions that may be executed to effectuate the operations described herein. For example, the memory 236 stores or is encoded with instructions for operating the pump system 100. The processor 238 includes a collection of one or more microcontrollers and/or microprocessors, for example, each configured to execute respective software instructions stored in the memory 236. The processor 238 is configured to, for example, execute the instructions stored in the memory 236 to operate the pump system 100.

By way of example, the control system 234 is configured to operate the three way valves 230, 232 to adjust flow of fluid through the conduit system 202. In certain embodiments, the control system 234 is configured to adjust the position of the three way valves 230, 232 based on a parameter determined by a sensor 240. The parameter may indicate, for instance, a composition of the fluid in the conduit system 202 (e.g., flowing through any of the exchange conduits 220, 222, 224), a fluid pressure in the conduit system 202, and/or a fluid temperature in the conduit system 202. In response to the parameter indicating fluid is to be discharged (e.g., the composition of the fluid has changed to indicate presence of a contaminant, the fluid pressure exceeds a threshold to indicate undesirable flow of process fluid into the conduit system 202, the fluid temperature is beyond a threshold range to indicate potentially changed effectiveness of the process fluid), the control system 234 is configured to adjust the three way valves 230, 232 to the second position to direct fluid to the discharge conduits 226, 228 for discharge from the conduit system 202. To this end, the control system 234 is communicatively coupled to the sensor 240 and is configured to receive the parameter and operate the three way valves 230, 232 accordingly based on the received parameter. In additional or alternative embodiments, the control system 234 is configured to adjust the position of the three way valves 230, 232 at a set frequency. For instance, the control system 234 is configured to transition the three way valves 230, 232 from the first position to the second position to discharge fluid from the conduit system 202 at set intervals of time, regardless of a determiner parameter of the fluid.

Additionally or alternatively, the conduit system 202 may include a vent system 242 configured to discharge fluid from the conduit system 202 (e.g., to the external environment, to a fluid reservoir, to a fluid processing system), such as based on pressure to avoid pressure buildup in the conduit system 202. Thus, the vent system 242 may further help improve a useful lifespan of the conduit system 202. The vent system 242 is fluidly coupled to the third exchange conduit 224 in the illustrated embodiment. For example, the vent system 242 may include a regulating valve 244 configured to open or actuate upon fluid pressure in the conduit system 202 exceeding a first threshold pressure (e.g., a lower threshold pressure), such as a pressure between 1.5 bar (21.8 pounds per square inch (psi)) and 2 bar (29 psi).

Thus, the regulating valve 244 maintains the fluid pressure in the conduit system 202 below the first threshold pressure. Additionally or alternatively, the vent system 242 may include a pressure relief valve 246 configured to open or actuate upon fluid pressure in the conduit system 202 exceeding a second threshold pressure (e.g., a higher threshold pressure), such as a pressure between 6 bar (87 psi) and 7 bar (101.5 psi). As such, the pressure relief valve 246 is configured to increase discharge of fluid from the conduit system 202 (e.g., in combination with discharge of fluid from the conduit system 202 via the regulating valve 244) and maintain the fluid pressure in the conduit system 202 below the second threshold pressure, such as toward the first threshold pressure. That is, while the pressure in the conduit system 202 exceeds the second threshold pressure, each of the regulating valve 244 and the pressure relief valves 246 may open to provide increased discharge of fluid from the conduit system 202.

Still referring to FIG. 2, the depicted conduit system 202 is fluidly coupled to a process fluid/gas source 248 (e.g., a process fluid reservoir, a process fluid processing system), which may, but need not, be a part of or in fluid communication with the pump system 100, and the process fluid source 248 is configured to direct process fluid into the conduit system 202. As such, the process fluid source 248 may increase or replenish the amount of process fluid in the conduit system 202 to enable the conduit system 202 to direct process fluid for filling the second chamber portion 104B and/or the fourth chamber portion 114B. For instance, the conduit system 202 may include a process fluid valve 250 configured to receive process fluid from the process fluid source 248 and direct process fluid into the third exchange conduit 224 to introduce process fluid into the conduit system 202.

In some embodiments, the process fluid valve 250 is a regulatory valve configured to direct process fluid into the conduit system 202 based on a pressure within the conduit system 202, the pressure indicating an amount of process fluid in the conduit system 202. As an example, the process fluid valve 250 may be configured to open upon the pressure within the conduit system 202 being below a minimum threshold pressure (e.g., indicating the amount of process fluid is low), which may be a pressure between 0.3 bar (4.4 psi) and 1 bar (14.5 psi). Thus, process fluid may be directed into and maintained above the minimum threshold pressure within the conduit system 202 and within the cylinders 102, 112 (e.g., within the second chamber portion 104B, within the fourth chamber portion 114B).

Additionally or alternatively, the control system 234 may be communicatively coupled to the process fluid valve 250 and configured to open the process fluid valve 250 based on the fluid pressure within the conduit system 202 (e.g., as indicated by the sensor 240) being below the minimum threshold pressure and/or at a set frequency. In either embodiment, the process fluid valve 250 is used to direct process fluid into the conduit system 202 to maintain a desirable amount of fluid in the conduit system 202. By way of example, the process fluid valve 250 introduces process fluid into the conduit system 202 at a positive pressure relative to that of external air in the external environment to enable the conduit system 202 to maintain the pressure in the second chamber portion 104B and/or in the fourth chamber portion 114B above the minimum threshold pressure to block introduction of external particles into the cylinders 102, 112.

In certain embodiments, the conduit system 202 directs fluid to the first chamber portion 104A and/or to the third chamber portion 114A. For example, the second chamber portion 104B and/or the fourth chamber potion 114 may contain a portion of the working fluid flow 206, 208, respectively (e.g., some of the first working fluid flow 206 may leak from the first chamber portion 104A to the second chamber portion 104B, some of the second working fluid flow 208 may leak from the third chamber portion 114A to the fourth chamber portion 114B). The conduit system 202 directs such working fluid flows 206, 208 from the second chamber portion 104B and the fourth chamber portion 114B to the first chamber portion 104A and/or to the second chamber portion 114A. Thus, the conduit system 202 enables the working fluid flows 206, 208 to be pressurized (e.g., even though the working fluid flows 206, 208 may have initially bypassed the pistons 106, 116) instead of being directed out away from the pump portion 101, thereby increasing operational efficiency of the pump system 100. In such embodiments, a filter or similar component may be used to remove fluidic particles other than the working fluid flows 206, 208 from the conduit system 202 to avoid directing other fluid (e.g., process fluid) into the first chamber portion 104A and/or into the third chamber portion 114A. Thus, the filter may prevent or at least discourage undesirable mixing between the working fluid flows 206, 208 with other fluid, as well as subsequent pressurization of fluid other than the working fluid flows 206, 208. Consequently, a more desirable composition of the working fluid flows 206, 208 may be pressurized in the first chamber portion 104A and/or in the third chamber portion 114A.

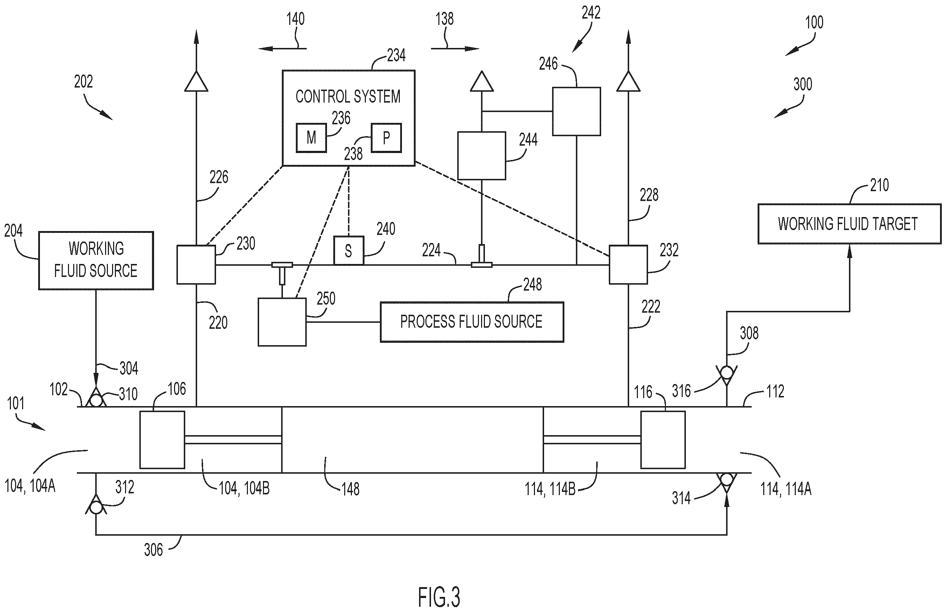

FIG. 3 is a schematic diagram of a fluid circuit 300 that may be implemented in the pump system 100. The fluid circuit 300 includes the conduit system 202 fluidly coupled to a pump portion, similar to FIG. 2. Consequently, the conduit system 202 is configured to direct a process fluid into the second chamber portion 104B and into the fourth chamber portion 114B. For example, the conduit system 202 includes the exchange conduits 220, 222, 224 to direct process fluid between the second chamber portion 104B and the fourth chamber portion 114B, the discharge conduits 226, 228 configured to direct fluid out of the conduit system 202 via operation of the three way valves 230, 232 (e.g., by the control system 234), and the vent system 242 configured to discharge fluid from the conduit system 202 based on pressure. Additionally, the conduit system 202 is configured to receive process fluid from the process fluid source 248 via the process fluid valve 250. However, now the pump system 100 is a two-stage booster that pressurizes a working fluid flow 304 via the first piston 106 and then via the second piston 116.

Accordingly, in the illustrated embodiment, the working fluid flow 304 directed by the working fluid source 204 is pressurized by each of the first piston 106 and the second piston 116. That is, the working fluid source 204 directs the working fluid flow 304 into the first cylinder 102, such as into the first chamber portion 104A (e.g., via the first passageway 142 of the first end cap 118), where the first piston 106 pressurizes the working fluid flow 304 and discharges the working fluid flow 304 (e.g., via movement of the drive shaft 148 in the second direction 140) as a first pressurized working fluid flow 306. The first pressurized working fluid flow 306 is then directed into the third chamber portion 114A (e.g., via the first passageway 142 of the second end cap 128) and is further pressurized by the second piston 116 (e.g., via movement of the drive shaft 148 in the first direction 138) to provide a second pressurized working fluid flow 308. The second pressurized working fluid flow 308 is discharged from the second cylinder 112 and directed toward the working fluid target 210.

To effectuate this scheme, the pump portion 101 includes cylinder valves arranged differently as compared to the pump portion 101 of FIG. 2. Specifically, a first valve 310, which may be a one-way valve, such as a check valve, blocks the working fluid flow 304 (e.g., the first pressurized working fluid flow 306) from exiting the first cylinder 102 toward the working fluid source 204, and a second valve 312, which may be a one-way valve, such as a check valve, blocks the first pressurized working fluid flow 306 from re-entering the first cylinder 102. Thus, the first pressurized working fluid flow 306 is forced toward the second cylinder 112. Moreover, a third valve 314, which may be a one-way valve, such as a check valve, blocks the working fluid flow 304 (e.g., the second pressurized working fluid flow 308) from exiting the second cylinder 112 toward the first cylinder 102, and a fourth valve 316, which may be a one-way valve, such as a check valve, blocks the second pressurized working fluid flow 308 from re-entering the second cylinder 112. As such, the second pressurized working fluid flow 308 is forced toward the working fluid target 210. Therefore, the valves 310, 312, 314, 316 may facilitate operation of the pump system 100 as a two-stage booster to pressurize the working fluid flow 304 via both pistons 106, 116.

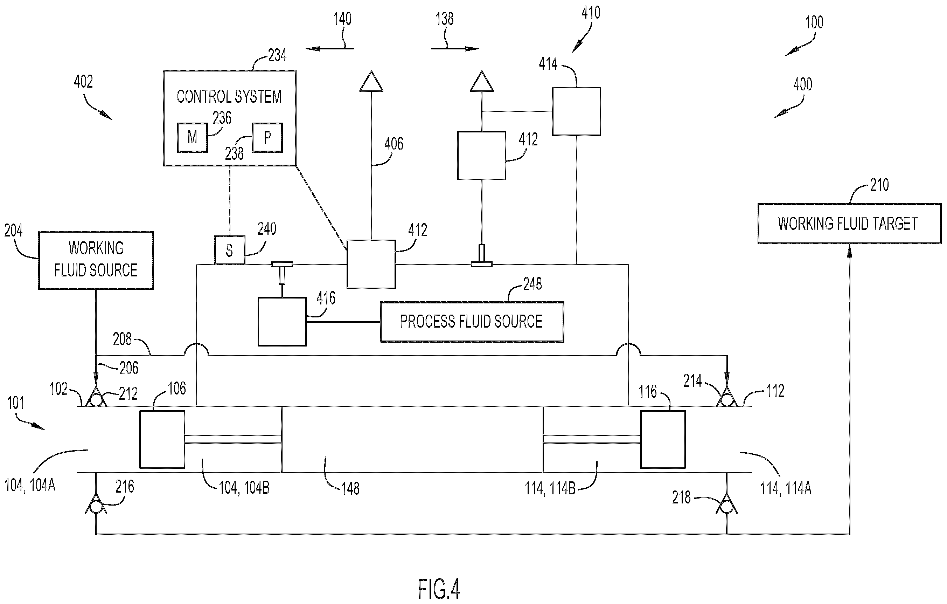

FIG. 4 is a schematic diagram of a fluid circuit 400 that may be implemented in the pump system 100. In the illustrated embodiment, the pump system 100 is a single-stage booster in which respective working fluid flows 206, 208 are separately pressurized by the pistons 106, 116. That is, the first piston 106 pressurizes the first working fluid flow 206 (e.g., via movement of the drive shaft 148 in the second direction 140), the second piston 116 pressurizes the second working fluid flow 208 (e.g., via movement of the drive shaft 148 in the first direction 138), and the pressurized working fluid flows 206, 208 are directed to the working fluid target 210 (e.g., as a combined working fluid flow). However, this is merely an example and concepts illustrated in FIG. 4 might also be applicable to pumps with two or more stages.

The fluid circuit 400 includes a conduit system 402 configured to direct a process fluid into the second chamber portion 104B and into the fourth chamber portion 114B. The illustrated conduit system 402 includes an exchange conduit 404 (e.g., a shared exchange conduit, a common exchange conduit, multiple exchange conduits fluidly coupled to one another) configured to direct process fluid into and out of the second chamber portion 104B and into and out of the fourth chamber portion 114B. For example, the exchange conduit 404 may be fluidly coupled to the second passageways 144 of the adapters 158, 160, and process fluid may flow through the exchange conduit 404 to flow between the second chamber portion 104B and the fourth chamber portion 114B. However, the fluid circuit 400 has different discharge paths as compared to the fluid circuits illustrated in prior figures.

Specifically, the conduit system 402 includes a discharge conduit 406 (e.g., a shared discharge conduit, a common discharge conduit) serving as a single discharge path configured to direct fluid out of the conduit system 402. The discharge conduit 406 is fluidly coupled to the exchange conduit 404. Thus, the discharge conduit 406 is configured to direct fluid from each of the second chamber portion 104B and the fourth chamber portion 114B out of the conduit system 402 (e.g., via fluid flow from the second chamber portion 104B and/or from the fourth chamber portion 114B into the exchange conduit 404). In other words, a single discharge conduit 406 may be used to direct fluid out of the conduit system 402, including fluid flow from the fourth chamber portion 114B and from the second chamber portion 104B.

As an example, the discharge conduit 406 may be fluidly coupled to the exchange conduit 404 via a three way valve 408 that is adjustable to change the flow of fluid through the conduit system 402. For instance, a first position of the three way valve 408 may direct fluid through the exchange conduit 404 between the second chamber portion 104B and the fourth chamber portion 114B. A second position of the three way valve 408 may direct fluid from the exchange conduit 404 to the discharge conduit 406 to direct fluid out of the conduit system 402 (e.g., from one side or the other). In some embodiments, the three way valve 408 may be transitioned to additional positions. For example, a third position of the three way valve 408 may direct fluid from the second chamber portion 104B to the discharge conduit 406 and block fluid flow between the fourth chamber portion 114B and the second chamber portion 104B and/or between the fourth chamber portion 114B and the discharge conduit 406. A fourth position of the three way valve 408 may direct fluid from the fourth chamber portion 114B to the discharge conduit 406 and block fluid flow between the second chamber portion 104B and the fourth chamber portion 114B and/or between the second chamber portion 104B and the discharge conduit 406. In certain embodiments, the control system 234 is communicatively coupled to the three way valve 408 and is configured to operate the three way valve 408, such as based on a parameter determined by the sensor 240.

The conduit system 402 additionally or alternatively includes a vent system 410 configured to discharge fluid from the conduit system 402 based on pressure. For example, the vent system 410 may include a regulating valve 412 configured to open or actuate upon fluid pressure in the conduit system 402 exceeding a first threshold pressure (e.g., a lower threshold pressure) and/or a pressure relief valve 414 configured to open or actuate upon fluid pressure in the conduit system 202 exceeding a second threshold pressure (e.g., a higher threshold pressure).

The conduit system 402 may also be fluidly coupled to the process fluid source 248 and is configured to receive process fluid from the process fluid source 248. To illustrate this, the depicted conduit system 402 includes a process fluid valve 416 configured to direct process fluid into the exchange conduit 404, such as based on a fluid pressure in the conduit system 402 and/or via the control system 234.

Although the pump system 100 includes two cylinders 102, 112 that are fluidly coupled to one another to pass process fluid between the second chamber portion 104B and the fourth chamber portion 114B, the pump system 100 may include any suitable quantity of cylinders in additional or alternative embodiments. In such embodiments, each cylinder includes a piston disposed therein to divide the chamber of the cylinders, and the pistons are configured to move within their corresponding cylinders to pressurize working fluid in a chamber portion of each cylinder. Meanwhile, a process fluid fills another chamber portion of each cylinder, and movement of the pistons within their corresponding cylinders causes process fluid to pass between the cylinders.

Additionally, although the present disclosure primarily discusses directing working fluid into the first chamber portion 104A and into the third chamber portion 114A, as well as directing of process fluid into the second chamber portion 104B and into the fourth chamber portion 114B, in additional or alternative embodiments, working fluid may be directed into any suitable part of the first cylinder 102 and/or of the second cylinder 112 (e.g., into the second chamber portion 104B, into the fourth chamber portion 114B). Correspondingly, the process fluid may be directed into a different part of the first cylinder 102 and/or of the second cylinder 112 (e.g., into the first chamber portion 104A, into the third chamber portion 114A) to facilitate movement of the pistons 106, 116 and block introduction of external particles into the cylinders 102, 112.

Further still, although movement of the pistons 106, 116 in opposite directions 138, 140 (e.g., as driven by the drive shaft 148) cause process fluid to flow between the cylinders 102, 112 in the illustrated embodiments, in additional or alternative embodiments, the pistons 106, 116 may move in separate directions, and process fluid may flow between the cylinders 102, 112 during such movement of the pistons 106, 116. By way of example, the first piston 106 may move in a first direction to reduce the volume of the first chamber portion 104A and increase the volume of the second chamber portion 104B. Meanwhile, the second piston 116 may move in a second direction, transverse (e.g., perpendicular) to the first direction, to increase the volume of the third chamber portion 114A and reduce the volume of the fourth chamber portion 114B. Such movement of the first piston 106 and of the second piston 116 to increase the volume of the second chamber portion 104B and reduce the volume of the fourth chamber portion 114B, respectively, may cause process fluid to flow from the fourth chamber portion 114B to the second chamber portion 104B. Thus, regardless of the orientation of the direction of movement of the pistons 106, 116 relative to one another, the arrangement of the pistons 106, 116 to adjust the volume of the second chamber portion 104B with respect to the volume of the fourth chamber portion 114B may cause process fluid to flow between the second chamber portion 104B and the fourth chamber portion 114B.

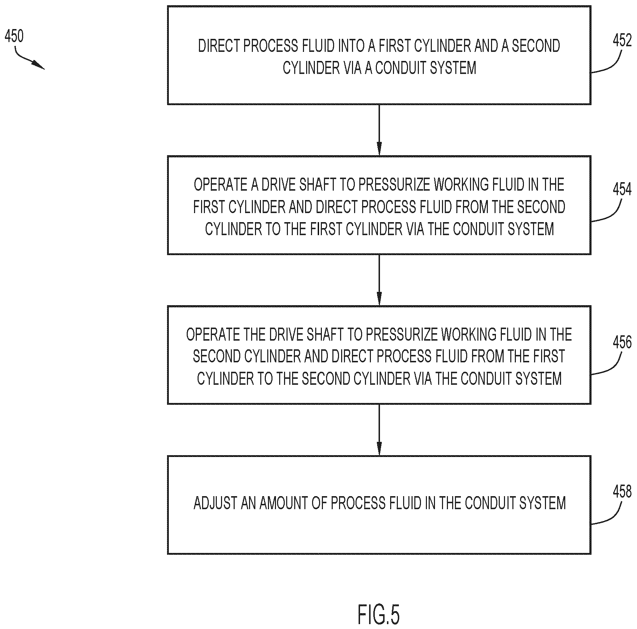

FIG. 5 is a flowchart of a method 450 for operating the pump system 100. In some embodiments, the operations of the method 450 may be performed by a single entity, such as by the control system 234. Additionally or alternatively, different operations of the method 450 may be performed by different entities. It should be noted that the method 450 may be performed differently than depicted. For example, an additional operation may be performed, a depicted operation may be performed differently, a depicted operation may not be performed, and/or any of the depicted operations may be performed in a different order.

At block 452, process fluid is directed into a first cylinder and a second cylinder via a conduit system, such as any of the conduit systems 202, 402. For example, the process fluid may be directed to fill the second chamber portion 104B of the first cylinder 102 and/or the fourth chamber portion 114B of the second cylinder 112 to increase the pressure within the second chamber portion 104B and/or within the fourth chamber portion 114B to a threshold pressure. Filling of the second chamber portion 104B and/or of the fourth chamber portion 114B with the process fluid may block external particles from being introduced into the second chamber portion 104B and/or into the fourth chamber portion 114B, thereby discouraging external particles from mixing with working fluid.

At block 454, a drive shaft, such as drive shaft 148, is operated to pressurize working fluid in the first cylinder and to direct process fluid from the second cylinder to the first cylinder via the conduit system. For example, the drive shaft 148 may be driven in the second direction 140 to drive the first piston 106 in the second direction 140, thereby reducing a volume of the first chamber portion 104A and increasing a volume of the second chamber portion 104B. The reduced volume of the first chamber portion 104A causes pressurization of working fluid in the first chamber portion 104A. Additionally, movement of the drive shaft 148 in the second direction 140 drives the second piston 116 in the second direction 140 to increase a volume of the third chamber portion 114A and decrease a volume of the fourth chamber portion 114B. The reduced volume of the fourth chamber portion 114B causes process fluid (e.g., a mixture of process fluid and working fluid) to flow out of the fourth chamber portion 114B and into the conduit system. The conduit system then directs the process fluid into the second chamber portion 104B having the increased volume.

At block 456, the drive shaft is operated to pressurize working fluid in the second cylinder and to direct process fluid from the first cylinder to the second cylinder via the conduit system. That is, the drive shaft is driven in the first direction to drive the second piston in the first direction , thereby reducing a volume of the third chamber portion and increasing a volume of the fourth chamber portion . The reduced volume of the third chamber portion causes pressurization of working fluid in the third chamber portion. Movement of the drive shaft in the first direction also drives the first piston to move in the first direction to increase a volume of the first chamber portion and decrease a volume of the second chamber portion . The reduced volume of the second chamber portion causes process fluid (e.g., a mixture of process fluid and working fluid) to flow out of the second chamber portion and into the conduit system, which then directs the process fluid into the fourth chamber portion having the increased volume. As such, during movement of the drive shaft to pressurize working fluid in the first cylinder and in the second cylinder , each of the second chamber portion and the fourth chamber portion remains filled with process fluid (e.g., to pressurize the second chamber portion 104B and the fourth chamber portion 114B to the threshold pressure).

At block 458, an amount of process fluid in the conduit system is adjusted. In some embodiments, process fluid is directed out of the conduit system. By way of example, process fluid is directed out of the conduit system at set intervals of time. Additionally or alternatively, process fluid is directed out of the conduit system based on a determined parameter, which may indicate potential contamination of the process fluid and/or pressure buildup within the conduit system. In any of these examples, directing of process fluid out of the conduit system may improve effectiveness of the process fluid and/or prolong a useful lifespan of the conduit system.

In additional or alternative embodiments, process fluid is directed into the conduit system. For instance, process fluid is directed into the conduit system to maintain a fluid pressure within the conduit system, which may ensure that the second chamber portion 104B and/or the fourth chamber portion 114B can be sufficiently filled with process fluid to block introduction of external particles into the cylinders 102, 112. To this end, a valve (e.g., the process fluid valve 250, the process fluid valve 416) is operated to direct process fluid from the process fluid source 248 into the conduit system. By way of example, process fluid may be directed out of the conduit system at a scheduled period of time, thereby reducing a fluid pressure within the conduit system (e.g., below a threshold pressure that would enable the second chamber portion 104B and/or the fourth chamber portion 114B to be sufficiently filled with process fluid). In response, the valve is opened to direct process fluid form the process fluid source 248 into the conduit system, thereby replenishing the process fluid previously directed out of the conduit system to increase the fluid pressure within the conduit system (e.g., above the threshold pressure to enable the second chamber portion 104B and/or the fourth chamber portion 114B to be sufficiently filled with process fluid). Thus, process fluid is directed into the conduit system to maintain desirable operation of the pump system 100.

As used herein, unless expressly stated to the contrary, use of the phrase 'at least one of, 'one or more of, 'and/or', variations thereof, or the like are open-ended expressions that are both conjunctive and disjunctive in operation for any and all possible combination of the associated listed items. For example, each of the expressions 'at least one of X, Y and Z', 'at least one of X, Y or Z', 'one or more of X, Y and Z', 'one or more of X, Y or Z' and 'X, Y and/or Z' can mean any of the following: 1) X, but not Y and not Z; 2) Y, but not X and not Z; 3) Z, but not X and not Y; 4) X and Y, but not Z; 5) X and Z, but not Y; 6) Y and Z, but not X; or 7) X, Y, and Z.

Additionally, unless expressly stated to the contrary, the terms 'first', 'second', 'third', etc., are intended to distinguish the particular nouns they modify (e.g., element, condition, node, module, activity, operation, etc.). Unless expressly stated to the contrary, the use of these terms is not intended to indicate any type of order, rank, importance, temporal sequence, or hierarchy of the modified noun. For example, 'first X' and 'second X' are intended to designate two 'X' elements that are not necessarily limited by any order, rank, importance, temporal sequence, or hierarchy of the two elements. Further as referred to herein, 'at least one of and 'one or more of can be represented using the '(s)' nomenclature (e.g., one or more element(s)).

Each example embodiment disclosed herein has been included to present one or more different features. However, all disclosed example embodiments are designed to work together as part of a single larger system or method. This disclosure explicitly envisions compound embodiments that combine multiple previously-discussed features in different example embodiments into a single system or method.

One or more advantages described herein are not meant to suggest that any one of the embodiments described herein necessarily provides all of the described advantages or that all the embodiments of the present disclosure necessarily provide any one of the described advantages. Numerous other changes, substitutions, variations, alterations, and/or modifications may be ascertained to one skilled in the art and it is intended that the present disclosure encompass all such changes, substitutions, variations, alterations, and/or modifications as falling within the scope of the appended claims.

## Claims

1. A pump system, comprising:
a first cylinder (102);
a first piston (106) disposed within the first cylinder (102) to define a first chamber portion (104A) and a second chamber portion (104B) within the first cylinder, wherein the first piston (106) is configured to move in a first direction within the first cylinder (102) to draw working fluid into the first chamber portion (104A), and the first piston (106) is configured to move in a second direction within the first cylinder (102) to pressurize working fluid and discharge working fluid from the first chamber portion (104A);
a second cylinder (112);
a second piston (116) disposed within the second cylinder (112) to define a third chamber portion (114A) and a fourth chamber portion (114B) within the second cylinder (112), wherein the second piston (116) is configured to move in a third direction within the second cylinder (116) to draw working fluid into the third chamber portion (114A), and the second piston (116) is configured to move in a fourth direction within the second cylinder (112) to pressurize working fluid and discharge working fluid from the third chamber portion (114A); and
a conduit system (202, 402) that fluidly couples the second chamber portion (104B) and the fourth chamber portion (114B) to one another, wherein the conduit system is configured to direct fluid between the second chamber portion (104B) and the fourth chamber portion (114B).

2. The pump system of claim 1, wherein the first piston (106) is configured to move in the second direction within the first cylinder to direct fluid from the second chamber portion (104B) toward the fourth chamber portion (114B) via the conduit system, and the second piston (116) is configured to move in the fourth direction within the second cylinder to direct fluid from the fourth chamber portion (114B) toward the second chamber portion (104B) via the conduit system.

3. The pump system of claim 1, comprising a vent system (242, 410) configured to discharge fluid from the conduit system (202, 402).

4. The pump system of claim 3, wherein the vent system (242, 410) comprises a regulating valve configured to actuate to discharge fluid from the conduit system based on a fluid pressure within the conduit system (202, 402) exceeding a threshold pressure.

5. The pump system of claim 1, comprising a valve configured to direct a process gas from a process gas source into the conduit system (202, 402).

6. The pump system of claim 5, wherein fluid directed between the second chamber portion (104B) and the fourth chamber portion (114B) via the conduit system (202, 402) comprises the process gas; or wherein the valve is configured to introduce the process gas into the conduit system at a positive pressure relative to a pressure of air in an external environment surrounding the pump system.

7. The pump system of claim 1, wherein the first cylinder (102) and the second cylinder (112) have equal cross-sectional areas, wherein optionally the first piston (106) and the second piston (116) have equal cross-sectional areas.

8. The pump system of claim 1, wherein the pump system is a single stage, gas booster pump in which the first piston (106) and the second piston (116) are configured to pressurize separate working fluid flows.

9. A pump system, comprising:
a first cylinder (102);
a first piston (106) disposed within the first cylinder (102) to define a first chamber portion (104A) and a second chamber portion (104B) within the first cylinder (102),
wherein the first cylinder (102) is configured to receive working fluid at the first chamber portion (104A), and the first piston (106) is configured to pressurize working fluid within the first chamber portion;
a second cylinder (112); and
a second piston (116) disposed within the second cylinder to define a third chamber portion (114A) and a fourth chamber portion (114B) within the second cylinder,
wherein the second cylinder is configured to receive working fluid at the third chamber portion, the second piston is configured to pressurize working fluid within the third chamber portion (114A), the second chamber portion (104B) and the fourth chamber portion are fluidly coupled to one another, and movement of the first piston in the first cylinder to pressurize working fluid within the first chamber portion,
movement of the second piston in the second cylinder to pressurize working fluid within the third chamber portion (114A), or both, directs fluid between the second chamber portion (104B) and the fourth chamber portion (114B).

10. The pump system of claim 9, comprising a conduit system fluidly coupled to the second chamber portion (104B) and to the fourth chamber portion (114B).

11. The pump system of claim 10, wherein fluid directed between the second chamber portion (104B) and the fourth chamber portion (114B) via the conduit system comprises a process gas introduced into the conduit system at a positive pressure relative to a pressure of air in an external environment surrounding the pump system; or
wherein the conduit system (202, 402) comprises:
a discharge conduit configured to discharge fluid from the conduit system (202, 402); and
a three way valve, wherein a first position of the three way valve is configured to direct fluid between the second chamber portion (104B) and the fourth chamber portion (114B), and a second position of the three way valve is configured to direct fluid to the discharge conduit.

12. The pump system of claim 11, comprising a drive shaft (148) coupled to the first piston (106) and to the second piston (116), wherein movement of the drive shaft (148) in a first direction is configured to drive movement of the first piston (106) to pressurize working fluid within the first chamber portion and to drive movement of the second piston to draw working fluid into the third chamber portion (114A), and movement of the drive shaft in a second direction, opposite the first direction, is configured to drive movement of the second piston to pressurize working fluid within the third chamber portion (114A) and to drive movement of the first piston to draw working fluid into the first chamber portion (104A);
wherein optionally movement of the drive shaft in the first direction is configured to drive movement of the second piston to direct fluid from the fourth chamber portion toward the second chamber portion, and movement of the drive shaft in the second direction is configured to drive movement of the first piston to direct fluid from the second chamber portion toward the fourth chamber portion.

13. The pump system of claim 9, wherein the first piston (106) is configured to pressurize a working fluid flow, the first cylinder is configured to discharge the working fluid flow pressurized by the first piston (106) to the second cylinder, and the second piston 8116) is configured to further pressurize the working fluid flow.

14. A conduit system comprising:
a first leg configured to fluidly couple to a first chamber portion of a first cylinder that includes a first piston defining the first chamber portion (104A) and a second chamber portion (104B), wherein movement of the first piston (106) in the first cylinder pressurizes working fluid in the second chamber portion (104B); and
a second leg configured to fluidly couple to a third chamber portion of a second cylinder that includes a second piston defining the third chamber portion (114A) and a fourth chamber portion (114B), wherein movement of the second piston in the second cylinder pressurizes working fluid in the fourth chamber portion, and the first leg and the second leg fluidly couple the first chamber portion (104A) and the third chamber portion (114A) to one another.

15. The conduit system of claim 14, further comprising a valve configured to introduce a process fluid into the conduit system at a threshold pressure, and the first leg and the second leg are configured to direct the process fluid between the first chamber portion and the third chamber portion; or
further comprising a valve configured to direct fluid out of the first leg and the second leg at a threshold pressure.
